# EUROPEAN PATENT APPLICATION

(11) **EP 4 560 555 A1**
(43) Date of publication of application: **28.05.2025**
(21) Application number: 23211501.4
(22) Date of filing: 22.11.2023
(51) Int. Cl.: G06Q 20/06, G06Q 20/20, G06Q 20/32, G06Q 20/34, G06Q 20/36, G06Q 20/38, G06Q 20/40

(54) **A SYSTEM AND METHOD FOR ENABLING OFFLINE DIGITAL PAYMENTS WHEN THE SYSTEM IS NOT CONNECTED TO THE INTERNET**

(71) Applicant: Ningbo Geely Automobile Research & Development Co. Ltd., Hangzhou Bay New District Ningbo Zhejiang 315336 (CN); Zhejiang Geely Holding Group Co., Ltd., Hangzhou, Zhejiang 310051 (CN)
(72) Inventor: SETTERBERG, Johan, 416 79 Göteborg (SE); LINDBERG NILSSON, Erik, 417 47 Göteborg (SE); GARDTMAN, Angelika, 412 49 Göteborg (SE)
(74) Representative: Zacco Sweden AB

(57) **Abstract**

The disclosure relates to a system (100) for enabling offline digital payments when the system (100) is not connected to the Internet (50), the system (100) comprises: a service provider device (10a,10b) configured to communicate via a local communication network (55); store, transfer and manage offline transaction information, and to manage access to a service; a user device (20a,20b) configured to communicate via the local communication network (55); and store, transfer and manage offline transaction information; and a processing circuitry (102a,102b,102c) operatively connected to the service provider device (10a,10b) and the user device (20a,20b) configured to: determine, by the service provider device (10a,10b) that the user device (20a,20b) is granted participation in the system (100); receive, at the service provider device (10a,10b) from the user device (20a,20b) via the local communication network (55), offline transaction information data comprising a credit value (CV); read, at the service provider device (10a,10b), the credit value (CV) of the received offline transaction information data; determine, at the service provider device (10a,10b), possible available services based on the credit value (CV); enable, by the service provider device (10a,10b), access to an available service; update, at the service provider device (10a,10b), after access to the available service has been granted, the credit value (CV) of the offline transaction information data; and send, from the service provider device (10a,10b) to the user device (20a,20b) via the local communication network (55), an updated offline transaction information data comprising the updated credit value (CV). The disclosure further relates to a method for enabling offline digital payments in a system (100) when the system (100) is not connected to the Internet (50) and a computer program product (500).

## Description

### Technical field

The present disclosure relates to a system for enabling offline digital payments when the system is not connected to the internet, a method for enabling offline digital payments in a system when the system is not connected to the internet and a computer program product.

More specifically, the disclosure relates to a system for enabling offline digital payments when the system is not connected to the internet, a method for enabling offline digital payments in a system when the system is not connected to the internet and a computer program product as defined in the introductory parts of the independent claims.

### Background art

Today the majority of all digital payments are carried out relying on an online Internet connection to e.g. verify a credit amount or a user. Often a service provider device is provided with a payment system that is connected to the Internet. A user can present e.g. a contactless card or a smartphone via an interface of the service provider device, and the payment system connected to the Internet connects to a remote server to look up e.g. an account balance in order to approve a certain credit that can be used for payment of a product or a service at the service provider device.

There are however occasions when there is a desire to perform a digital payment even if there is no connection to the Internet, when e.g. the service provider device with the payment system is offline. One example is when a system want to save energy and not force several servers to be online. Offline systems are also cheaper to build since then the service provider device does not need to be equipped with connectivity to the cloud and there is no need for Internet servers.

A use case when there is a desire to perform a digital payment even if there is no connection to the Internet is when a vehicle runs out of energy and needs to be refilled. If the user of the vehicle cannot refill the vehicle due to that the payment system is not connected to the Internet, the vehicle cannot continue to drive, but must wait for the payment system to be connected to the Internet again before the vehicle can be refilled and can continue its journey.

There are also payment systems that allow a digital payment even if the system is temporarily not connected to the Internet, however, when connection to the Internet is reestablished, and the payment system is synchronized , the credit may be more that what is allowed or what the account balance would allow.

### Summary

It is an object of the present disclosure to mitigate, alleviate or eliminate one or more of the above-identified deficiencies and disadvantages in the prior art and solve at least the above mentioned problem.

According to a first aspect there is provided a system for enabling offline digital payments when the system is not connected to the Internet. The system comprises a service provider device configured to communicate via a local communication network, store, transfer and manage offline transaction information, and to manage access to a service. The system further comprises a user device configured to communicate via the local communication network, and store, transfer and manage offline transaction information.

The system further comprises a processing circuitry operatively connected to the service provider device and the user device configured to determine, by the service provider device that the user device is granted participation in the system; receive, at the service provider device from the user device via the local communication network, offline transaction information data comprising a credit value, read, at the service provider device, the credit value of the received offline transaction information data, determine, at the service provider device, possible available services based on the credit value, enable, by the service provider device, access to an available service, update, at the service provider device, after access to the available service has been granted, the credit value of the offline transaction information data, and send, from the service provider device to the user device via the local communication network, an updated offline transaction information data comprising the updated credit value.

An advantage with this first aspect is that the service provider device can enable access to an available service to the user device without a connection to the Internet, based on offline transaction information data and communication via the local communication network, and then provide the user device with an updated offline transaction information data comprising an updated credit value for enabling a further offline digital payment based on the updated credit value stored at the user device. Another advantage is that even if there is no connection to the Internet, the credit value is managed, which minimizes the risk of performing a digital payment without allowable credit.

According to some embodiments, in order to determine if the user device is to be granted participation in the system the processing circuitry is further configured to store, at the service provider device, offline transaction information data the system comprises a payload of a number of predefined fake transactions for identifying participation in the system and receive, at the service provider device from a user device via the local communication network, offline transaction information data comprising a payload of a number of predefined fake transactions determine, at the service provider device, if the predefined fake transactions in the received offline transaction information data corresponds to predefined fake transactions of any previously stored offline transaction information data at the service provider device, and in a determination that the received offline transaction information data corresponds to predefined fake transactions of a previously stored offline transaction information data at the service provider device, grant participation in the system to the user device.

An advantage with this embodiment is that the service provider device does not need to be connected to the Internet, to access remote data, but can locally, based on previously stored offline transaction information data at the service provider device, determine if the user device should be granted participation in the system.

According to some embodiments, the processing circuitry is further configured to reserve, by the service provider device, a temporary credit value associated with the available service based on the credit value and update, at the service provider device, the credit value of the offline transaction information data with the temporary credit value, and send, from the service provider device to the user device via the local communication network, an updated offline transaction information data the system comprises an updated credit value based on the temporarily credit value.

An advantage with this embodiment is that a reservation can be made without connection to the Internet, in order to secure that payment of an available service can be made at a later point in time when the available service has been performed or delivered, and at the same tame enable the user device to access a further service provider device with restrictions in the credit value based on the temporarily credit value.

According to some embodiments, the processing circuitry is further configured to determine, by the service provider device, that a consumed credit value associated with the available service corresponds to the available credit value comprised in the offline transaction information data from the user device, and terminate the service, by the service provider device.

An advantage with this embodiment is that the service provider device can count down the available credit according to the cost of the available service, and terminate the service, even if the user device is no longer in the vicinity of the local communication network and without access to the Internet.

According to some embodiments, the determination, at the service provider device, if the predefined fake transactions in the received offline transaction information data corresponds to predefined fake transactions of any previously stored offline transaction information data at the service provider device, the system comprises a determination of a checksum or cryptographic hash based on the predefined fake transactions.

An advantage with this embodiment is that a further check can be performed in order to enhance the access control for granting participation in the system to the user device.

According to some embodiments, the offline transaction information data is configured to be sent from a first user device to a second user device via a local communication network.

An advantage with this embodiment is that the offline transaction information data including the credit value can be transferred, from one user device to another user device.

According to some embodiments, the offline transaction information data comprises a payload of a number of predefined fake transactions and an updated credit value based on the last digital payment and updated by the service provider device, wherein the predefined fake transactions and the updated credit value are both associated with a checksum or cryptographic hash and the determination, at the service provider device, if the predefined fake transactions in the received offline transaction information data corresponds to predefined fake transactions of any previously stored offline transaction information data at the service provider device, the system comprises a determination of a checksum or cryptographic hash that is based on the predefined fake transactions and further comprising a determination of a checksum or cryptographic hash that is based on the updated credit value previously updated by the service provider device.

An advantage with this embodiment is that a further check can be performed in order to enhance the access control for granting participation in the system to the user device.

According to some embodiments, the local communication network is any of a wireless local area communication network, a contactless near field communication network, a locally connectable wired communication network, an optical local area communication network.

An advantage with this embodiment is that local connectivity can be enabled via plural different technologies, without a need for access to the Internet.

According to a second aspect there is provided a method for enabling offline digital payments in a system when the system is not connected to the Internet.

The method comprising the step of determining, by a service provider device that a user device is granted participation in the system, and the step of receiving, at the service provider device from the user device via a local communication network, offline transaction information data comprising a credit value.

The method then further comprising the step of reading, at the service provider device, the credit value of the received offline transaction information data, the step of determining, at the service provider device, possible available services based on the credit value, and the step of enabling, by the service provider device, access to an available service.

The method then further comprising the step of updating, at the service provider device, after access to the available service has been granted, the credit value of the offline transaction information data, and the step of sending, from the service provider device to the user device via the local communication network, an updated offline transaction information data comprising the updated credit value.

An advantage with this second aspect is that the service provider device can enable access to an available service to the user device without a connection to the Internet, based on offline transaction information data and communication via the local communication network, and then provide the user device with an updated offline transaction information data comprising an updated credit value for enabling a further offline digital payment based on the updated credit value stored at the user device.

According to some embodiments, the method further comprises the step of storing, at the service provider device, offline transaction information data comprising a payload of a number of predefined fake transactions for identifying participation in the system, the step of receiving, at the service provider device from the user device via the local communication network, offline transaction information data comprising a payload of a number of predefined fake transactions determining, at the service provider device, if the predefined fake transactions in the received offline transaction information data corresponds to a predefined fake transactions of any previously stored offline transaction information data at the service provider device, and in determining that the received offline transaction information data corresponds to predefined fake transactions of a previously stored offline transaction information data at the service provider device, granting participation in the system to the user device.

An advantage with this embodiment is that the service provider device does not need to be connected to the Internet, to access remote data, but can locally, based on previously stored offline transaction information data at the service provider device, determine if the user device should be granted participation in the system.

According to some embodiments, method further comprises the step of reserving, by the service provider device, a temporary credit value associated with the available service based on the credit value, the step of updating, at the service provider device, the credit value of the offline transaction information data with the temporary credit value, and the step of sending, from the service provider device to the user device via the local communication network, an updated offline transaction information data comprising an updated credit value based on the temporarily credit value.

An advantage with this embodiment is that a reservation can be made without connection to the Internet, in order to secure that payment of an available service can be made at a later point in time when the available service has been performed or delivered, and at the same tame enable the user device to access a further service provider device with restrictions in the credit value based on the temporarily credit value.

According to some embodiments, the method further comprises the step of determining, by the service provider device, that a consumed credit value associated with the available service corresponds to the available credit value comprised in the offline transaction information data from the user device, and the step of terminating the service, by the service provider device.

An advantage with this embodiment is that the service provider device can count down the available credit according to the cost of the available service, and terminate the service, even if the user device is no longer in the vicinity of the local communication network and without access to the Internet.

According to some embodiments, the determination, at the service provider device, if the predefined fake transactions in the received offline transaction information data corresponds to predefined fake transactions of any previously stored offline transaction information data at the service provider device, the method comprises the step of a determination of a checksum or cryptographic hash based on the predefined fake transactions.

An advantage with this embodiment is that a further check can be performed in order to enhance the access control for granting participation in the system to the user device.

According to some embodiments, the offline transaction information comprises a payload of a number of predefined fake transactions and an updated credit value based on the last digital payment and updated by the service provider device, wherein the predefined fake transactions and the updated credit value are both associated with a checksum or cryptographic hash and the determination, at the service provider device, if the predefined fake transactions in the received offline transaction information data corresponds to predefined fake transactions of any previously stored offline transaction information data at the service provider device, the method comprises a determination of a checksum or cryptographic hash that is based on the predefined fake transactions and further comprising the step of determination of a checksum or cryptographic hash that is based on the updated credit value previously updated by the service provider device.

An advantage with this embodiment is that a further check can be performed in order to enhance the access control for granting participation in the system to the user device.

According to a third aspect there is provided a computer program product comprising a non-transitory computer readable medium, having thereon a computer program comprising program instructions, the computer program being loadable into a processing circuitry and configured to cause execution of the method when the computer program is run by the processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a system for enabling offline digital payments when the system is not connected to the Internet, according to an embodiment of the present disclosure.
Figure 2 illustrates offline transaction information data comprising a payload of a number of predefined fake transactions (PNPFT) and a credit value (CV), according to an embodiment of the present disclosure.
Figure 3 illustrates an example credit value (CV) comprising plural credit values for different services or products, according to an embodiment of the present disclosure.
Figure 4 illustrates offline transaction information data comprising a payload of a number of predefined fake transactions (PNPfT), a number of real user transactions (PNrUT), and a credit value (CV), according to an embodiment of the present disclosure.
Figure 5 illustrates offline transaction information data comprising a payload of a number of predefined fake transactions (PNPFT) and a credit value (CV) based on a temporarily credit value (TCV), according to an embodiment of the present disclosure.
Figure 6 illustrates a flow chart of the method steps according to the second aspect of the disclosure.
Figure 7 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

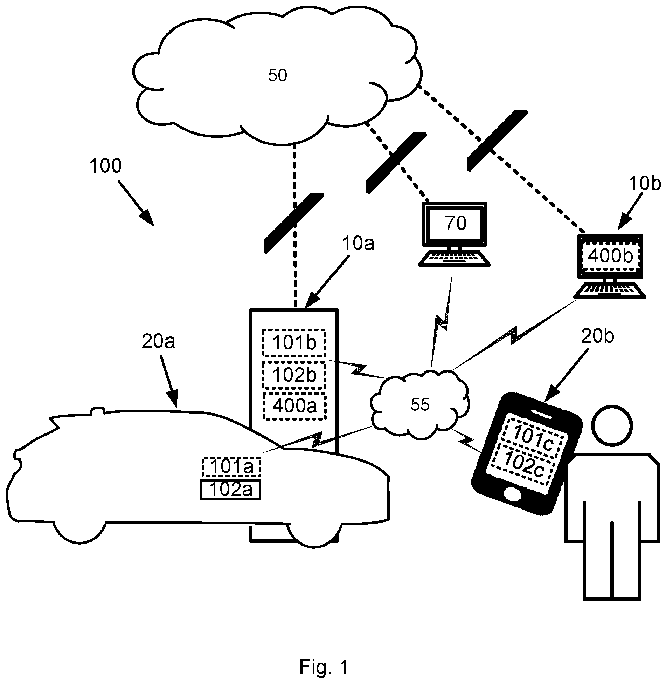

Figure 1 shows a system for enabling offline digital payments when the system 100 is not connected to the Internet 50, according to an embodiment of the present disclosure. In the illustration of Figure 1 the stroked dotted line to the Internet 50 emphasises that the system 100 is not connected to the Internet.

The first aspect of this disclosure shows a system 100 for enabling offline digital payments when the system 100 is not connected to the Internet 50.

The system 100 comprises a service provider device 10a,10b configured to communicate via a local communication network 55, store, transfer and manage offline transaction information, and to manage access to a service.

According to some embodiments manage access to a service includes to manage access to a product.

In an example managing access to a service is e.g. managing access to an entrance, access to charging, access to a garage, access to a toll road, access to a concert, access to a hair dresser, access to a hotel, access to a train etc. In an example managing access to a product is e.g. managing access to purchasing energy, access to purchasing a spare part, access to purchasing food, access to purchasing a sports item etc.

According to some embodiments the service provider device 10a,10b further comprising a user interface 400a, 400b configured to facilitate interaction with a user that is in the vicinity of the service provider device 10a,10b.

According to some embodiments the service provider device 10a,10b is a stationary device configured to manage access to a service at the service provider device 10a,10b.

In the example embodiment as illustrated in Figure 1, the service provider device 10a is a charger for electric vehicles. In a further example embodiment the service provider device 10a is arranged at a car wash machine.

In the example embodiment as illustrated in Figure 1, the service provider device 10b is a payment terminal at a vehicle service station. In a further example embodiment the service provider device 10b is a parking payment device.

According to some embodiments the local communication network 55 is configured to establish a local connection between the service provider device 10a, 10b and the user device 20a, 20b. According to some embodiments the local communication network 55 is operable independent of if any of the service provider device 10a, 10b and the user device 20a, 20b are connected to the Internet 50. According to some embodiments the local communication network 55 is configured to enable transfer and management of offline transaction information data between the service provider device 10a, 10b and the user device 20a, 20b.

The system 100 comprises a user device 20a,20b configured to communicate via the local communication network 55, and store, transfer and manage offline transaction information.

According to some embodiments the user device 20a,20b is a mobile device configured to access the service provider device 10a,10b via the local communication network 55.

According to some embodiment the user device 20a,20b is any of a portable electronic device, a smartphone, a smartwatch, a tablet, a computer, a portable payment device, and a vehicle.

In the example illustration in Figure 1, the user device 20a is a vehicle.

In the example illustration in Figure 1, the user device 20b is a smartphone.

The system 100 further comprises a processing circuitry 102a,102b,102c operatively connected to the service provider device 10a,10b and the user device 20a,20b.

According to some embodiments the processing circuitry 102a,102c is the processing circuitry of the user device 20a,20b. In an example as illustrated in Figure 1 the processing circuitry 102a is the processing circuitry of an on-board vehicle computer and connectable to the system 100 via the local communication network 55. In a further example as illustrated in Figure 1 the processing circuitry 102c is the processing circuitry of a smartphone and connectable to the system 100 via the local communication network 55.

According to some embodiments the processing circuitry 102b is the processing circuitry of the service provider device 10a. In an example as illustrated in Figure 1 the processing circuitry 102b is the processing circuitry of a charger for electric vehicles and connectable to the system 100 via the local communication network 55.

According to some embodiments, the system 100 further comprises a memory 101a,101b,101c operatively connected to the service provider device 10a,10b and the user device 20a,20b.

According to some embodiments the memory 101a,101c is the processing circuitry of the user device 20a,20b. In an example as illustrated in Figure 1 the memory 101a is the memory of an on-board vehicle computer and connectable to the system 100 via the local communication network 55. In a further example as illustrated in Figure 1 the memory circuitry 101c is a memory of the smartphone and connectable to the system 100 via the local communication network 55.

According to some embodiments the memory 101b is the memory of the service provider device 10a. In an example as illustrated in Figure 1 the memory 101b is the memory of a charger for electric vehicles and connectable to the system 100 via the local communication network 55.

According to some embodiments the processing circuitry 102a,102b,102c is configured to determine, by the coverage of the local communication network 55, that the user device 20a, 20b is within the vicinity of the service provider device 10a, 10b.

The processing circuitry 102a,102b,102c is configured to determine, by the service provider device 10a,10b that the user device 20a,20b is granted participation in the system 100, and receive, at the service provider device 10a,10b from the user device 20a,20b via the local communication network 55, offline transaction information data comprising a credit value CV.

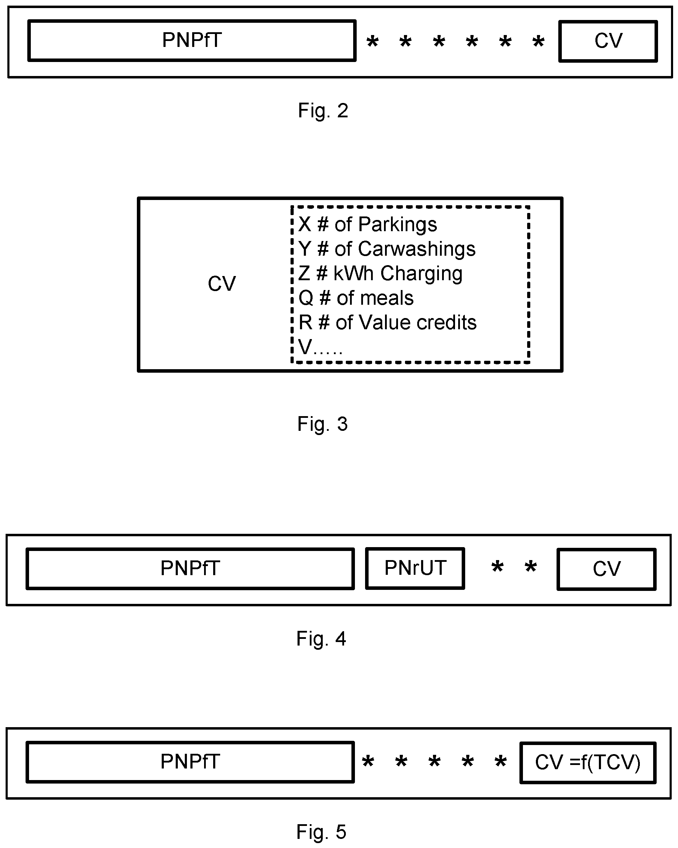

According to some embodiments, offline transaction information data comprising a payload of a number of predefined fake transactions PNPfT and a credit value CV. Figure 2 illustrates offline transaction information data comprising a payload of a number of predefined fake transactions PNPfT and a credit value CV, according to an embodiment of the present disclosure.

According to some embodiments a predefined fake transaction is a made up digital payment comprising transaction details and a credit value. According to some embodiments the number of predefined fake transactions PNPfT enables a unique digital fingerprint configured to be used for identification for participation in the system.

According to some embodiments the credit value CV comprises information related to a possible digital payment. According to some embodiments the credit value CV is a defined monetary value that can be used for digital payment of a service or product with a certain monetary value.

According to some embodiments the credit value CV is based on a last digital payment.

According to some embodiments the credit value CV comprises information related to a possible digital payment for a specific service or product.

According to some embodiments the credit value CV comprises plural credit values for different services or products. Figure 3 illustrates an example credit value CV comprising plural credit values for different services or products, according to an embodiment of the present disclosure.

In the example in Figure 3 the credit value CV comprising one credit value for X number of parkings, one credit value for Y number of car washings, one credit value for Z number of kilowatt hours, kWh, for charging, one credit value for Q number of meals, and one credit value for R number of value credits. According to some embodiments the credit value corresponds to a monetary value of any currency.

According to some embodiments the access to the available service is given based on the credit value CV. According to some embodiments the access to the available service is enabled as long as the credit value CV is not exceeded. According to some embodiments the access to the available service is enabled as long as the cost for the available service is not exceeding a threshold value that is lower than the credit value CV

The processing circuitry 102a,102b,102c is configured to read, at the service provider device 10a,10b, the credit value CV of the received offline transaction information data, determine, at the service provider device 10a,10b, possible available services based on the credit value CV, and enable, by the service provider device 10a,10b, access to an available service.

In an example embodiment, as illustrated in Figure 1, the service provider device 10a is a charger for electric vehicles, and access is given to charge the vehicle.

The processing circuitry 102a,102b,102c is then further configured to update, at the service provider device 10a,10b, after access to the available service has been granted, the credit value CV of the offline transaction information data, and send, from the service provider device 10a,10b to the user device 20a,20b via the local communication network 55, an updated offline transaction information data comprising the updated credit value CV.

In the example embodiment, as illustrated in Figure 1, where the service provider device 10a is a charger for electric vehicles, the updated credit value CV is updated dependent on how much energy that was used for charging the vehicle.

An advantage with this first aspect is that the service provider device service provider device 10a, 10b can enable access to an available service to the user device 20a, 20b without a connection to the Internet 50, based on offline transaction information data and communication via the local communication network 55, and then provide the user device 20a, 20b with an updated offline transaction information data comprising an updated credit value CV for enabling a further offline digital payment based on the updated credit value stored at the user device 20a, 20b. Another advantage is that even if there is no connection to the Internet, the credit value CV is managed, which minimizes the risk of performing a digital payment without allowable credit.

According to some embodiments in order to determine if the user device 20a,20b is to be granted participation in the system 100 the processing circuitry 102a,102b,102c is further configured to store, at the service provider device 10a,10b, offline transaction information data the system comprises a payload of a number of predefined fake transactions PNPfT for identifying participation in the system 100, receive, at the service provider device 10a,10b from a user device 20a,20b via the local communication network 55, offline transaction information data comprising a payload of a number of predefined fake transactions PNPfT, and determine, at the service provider device 10a,10b, if the predefined fake transactions PNPfT in the received offline transaction information data corresponds to predefined fake transactions PNPfT of any previously stored offline transaction information data at the service provider device 10a,10b, and in a determination that the received offline transaction information data corresponds to predefined fake transactions PNPfT of a previously stored offline transaction information data at the service provider device 10a,10b, grant participation in the system 100 to the user device 20a,20b.

According to some embodiments the offline transaction information data comprising the payload of a number of predefined fake transactions PNPfT for identifying participation in the system 100 is stored at the service provider device 10a,10b when the service provider device 10a,10b is installed.

According to some embodiments the offline transaction information data comprising the payload of a number of predefined fake transactions PNPfT for identifying participation in the system 100 is locally uploaded and stored at the service provider device 10a,10b.

According to some embodiments the offline transaction information data comprising the payload of a number of predefined fake transactions PNPfT for identifying participation in the system 100 is received and stored at the service provider device 10a,10b from a remote server when the service provider device 10a,10b is connected to the Internet 50.

An advantage with this embodiment is that the service provider device 10a,10b does not need to be connected to the Internet 50, to access remote data, but can locally, based on previously stored offline transaction information data at the service provider device 10a,10b, determine if the user device 20a,20b should be granted participation in the system 100.

According to some embodiments the offline transaction information data comprising a payload of a number of predefined fake transactions PNPFT, a number of real user transactions PNrUT, and a credit value CV. Figure 4 illustrates offline transaction information data comprising a payload of a number of predefined fake transactions PNPff, a number of real user transactions PNrUT, and a credit value CV, according to an embodiment of the present disclosure.

According to some embodiments the predefined fake transactions PNPFT are different from the real user transactions PnrUT. In an example embodiment the predefined fake transactions PNPfT could be used for plural user devices 20a,20b to grant participation in the system 100 for the for plural user devices 20a,20b. In an example the real user transactions PnrUT are unique for the user device 20a,20b, based on unique digital payments by a user of the user device 20a,20b.

According to some embodiments the real user transactions PnrUT are used to identify a unique user device 20a, 20b associated with the offline transaction information data. In an example the real user transactions PnrUT are used to identify a gift card or device, not necessarily the user.

According to some embodiments the real user transactions PnrUT are used to identify the user of the user device 20a,20b.

According to some embodiments the processing circuitry 102a,102b,102c is further configured to reserve, by the service provider device 10a,10b, a temporary credit value TCV associated with the available service based on the credit value CV, and update, at the service provider device 10a,10b, the credit value CV of the offline transaction information data with the temporary credit value TCV, and send, from the service provider device 10a,10b to the user device 20a,20b via the local communication network 55, an updated offline transaction information data the system comprises an updated credit value CV based on the temporarily credit value TCV. Figure 5 illustrates offline transaction information data comprising a payload of a number of predefined fake transactions PNPfT and a credit value CV based on a temporarily credit value TCV, according to an embodiment of the present disclosure.

An advantage with this embodiment is that a reservation can be made without connection to the Internet 50, in order to secure that payment of an available service can be made at a later point in time when the available service has been performed or delivered, and at the same tame enable the user device 20a,20b to access a further service provider device 10a,10b with restrictions in the credit value CV based on the temporarily credit value TCV.

In an example embodiment, a user device 20a,20b is enabled access to a charging service, while being in the vicinity of the charging service provider device, and with a credit value CV based on the temporarily credit value TCV, e.g. adjusted to an expected amount of charging, the user of the user device 20a,20b, e.g. the users smartphone, can enter a snack bar to purchase food while being in the vicinity of the snack bar service provider device, and use the available credit value CV that is calculated based on the temporarily credit value TCV.

According to some embodiments the processing circuitry 102a,102b,102c is further configured to determine, by the service provider device 10a,10b, that a consumed credit value associated with the available service corresponds to the available credit value CV comprised in the offline transaction information data from the user device 20a,20b, and terminate the service, by the service provider device 10a,10b.

In an example embodiment the available credit value CV is associated with a certain number of kilo Watt hours, kWh, for charging a vehicle, e.g. 80 kWh. When the service provider device 10a,10b, i.e. the charger in this example, determines that 80kWh has been consumed, the charging service is terminated.

An advantage with this embodiment is that the service provider device 10a,10b can count down the available credit according to the cost of the available service, and terminate the service, even if the user device 20a,20b is no longer in the vicinity of the local communication network 55 and without access to the Internet 50.

According to some embodiments the determination, at the service provider device 10a,10b, if the predefined fake transactions PNPff in the received offline transaction information data corresponds to predefined fake transactions PNPff of any previously stored offline transaction information data at the service provider device 10a,10b, comprises a determination of a checksum or cryptographic hash based on the predefined fake transactions.

Often a checksum is intended to verify, check, the integrity of data and identify data-transmission errors, while a hash is designed to create a unique digital fingerprint of the data. Often a checksum protects against accidental changes. Often a cryptographic hash protects against a very motivated attacker.

According to some embodiments the checksum and/or the cryptographic hash formula follow published formulas. In an example the checksum and/or the cryptographic hash formula follow standard algorithms, such as CRC32 or Sha256.

According to some embodiments the checksum and/or the cryptographic hash formula are secret.

According to some embodiments a checksum and/or a cryptographic hash is determined for each predefined fake transaction PNPff.

According to some embodiments a checksum and/or a cryptographic hash is determined for each real user transaction PnrUT.

According to some embodiments a checksum and/or a cryptographic hash is determined based on further data such as time stamp data, available service data, service provider device 10a, 10b identity data, user device 20a, 20b identity data, and local communication network 55 identity data.

According to some embodiments a checksum cks is determined as cks = y*111 + cv + 7 wherein the y equals the transaction serial number and CV the credit value.

According to some embodiments the checksum is calculated step wise from checksum_n+1 = cks + checksum_n.

Example:

| *y* | *CV* | *cks* | *prev_checksum* | *checksum* | |
|---|---|---|---|---|---|
| *1* | *10* | *128* | *42* | *160* | |
| *2* | *100* | *329* | *160* | *489* | |
| *3* | *1000* | *1340* | *489* | *1729* | |
| *4* | *100* | *551* | *1729* | *1270* | *Real user first transaction.* |
| | | | | | *Bought 100 credits.* |
| *5* | *80* | *642* | *1270* | *1812* | *Bought service for 20 credits* |
| *6* | *50* | *723* | *1812* | *1535* | *Bought service for 30 credits* |
| *7* | *10* | *794* | *1535* | *1229* | *Bought service for 10 credits* |

An advantage with this embodiment is that a further check can be performed in order to enhance the access control for granting participation in the system 100 to the user device 20a, 20b.

According to some embodiments the offline transaction information data comprises a payload of a number of predefined fake transactions PNPfT and an updated credit value CV based on the last digital payment and updated by the service provider device 10a,10b, wherein the predefined fake transactions PNPfT and the updated credit value CV are both associated with a checksum or cryptographic hash and the determination, at the service provider device 10a,10b, if the predefined fake transactions PNPFT in the received offline transaction information data corresponds to predefined fake transactions PNPFT of any previously stored offline transaction information data at the service provider device 10a,10b, the system comprises a determination of a checksum or cryptographic hash that is based on the predefined fake transactions PNPfT and further comprising a determination of a checksum or cryptographic hash that is based on the updated credit value CV previously updated by the service provider device 10a,10b.

An advantage with this embodiment is that a further check can be performed in order to enhance the access control for granting participation in the system 100 to the user device 20a, 20b.

According to some embodiments the offline transaction information data is configured to be sent from a first user device 20a to a second user device 20b via a local communication network 55. In one example, one user can transfer offline transaction information from the user's smartphone to another user's smartphone, or a user may transfer offline transaction information from one device, e.g. the user's smartphone to another device, e.g. user's smartwatch. In another example a store may sell gift card to a user.

An advantage with this embodiment is that the offline transaction information data including the credit value can be transferred, from one user device to another user device.

According to some embodiments the system 100 further comprises an offline transaction information data issuer device 70 configured to communicate via a local communication network, and the processing circuitry 102a, 102b, 102c is operatively connected to the offline transaction information data issuer device, the service provider device 10a, 10b and the user device 20a, 20b and further configured to generate offline transaction information data comprising a payload of a predefined number of predefined fake transactions PNPfT for identifying a unique user device 20a, 20b, and send, from the offline transaction information data issuer device to the user device 20a, 20b via the local communication network, the offline transaction information data, and store the offline transaction information data at the user device 20a, 20b.

According to some embodiments the processing circuitry 102a, 102b, 102c is further configured to add a credit value CV to the offline transaction information data.

According to some embodiments the offline transaction information data issuer device 70 is configured to add a credit value CV to the offline transaction information data.

According to some embodiments the an offline transaction information data issuer device 70 configured to add a credit value CV to the offline transaction information data and send, from the offline transaction information data issuer device 70 to the user device 20a, 20b via the local communication network, the offline transaction information data with the added credit value CV, and store the offline transaction information data with the added credit value CV at the user device 20a, 20b. In an example the offline transaction information data issuer device 70 makes a payment corresponding to the added credit value CV to the user device 20a, 20b.

According to some embodiments the local communication network 55 is any of a wireless local area communication network, a contactless near field communication network, a locally connectable wired communication network, an optical local area communication network.

An advantage with this embodiment is that local connectivity can be enabled via plural different technologies, without a need for access to the Internet 50.

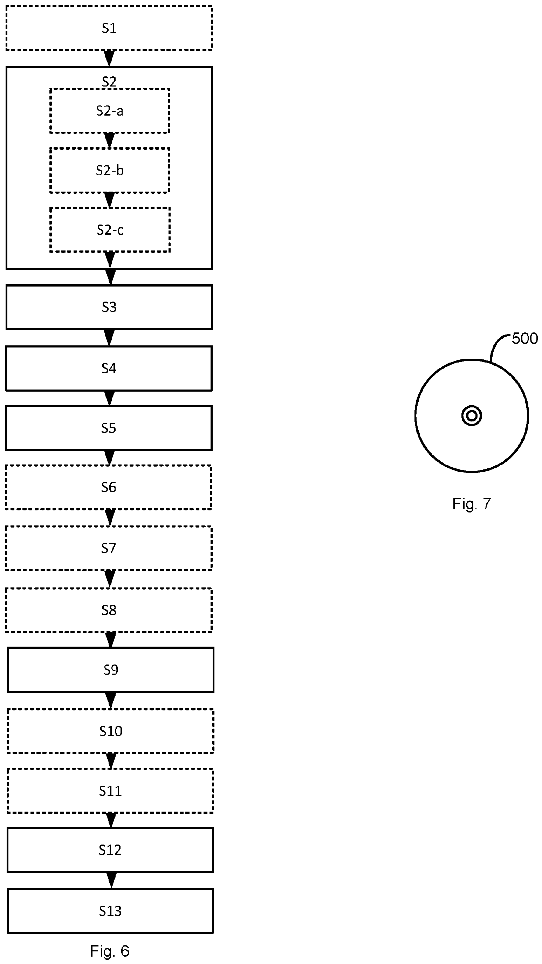

The second aspect of this disclosure shows a method for enabling offline digital payments in a system 100 when the system 100 is not connected to the Internet 50. Figure 6 illustrates a flow chart of the method steps according to the second aspect of the disclosure.

The method comprising the step of S2 determining, by a service provider device 10a,10b that a user device 20a,20b is granted participation in the system 100, the step of S3 receiving, at the service provider device 10a,10b from the user device 20a,20b via a local communication network 55, offline transaction information data comprising a credit value CV, the step of S4 reading, at the service provider device 10a,10b, the credit value CV of the received offline transaction information data, the step of S5 determining, at the service provider device 10a,10b, possible available services based on the credit value CV, the step of S9 enabling, by the service provider device 10a,10b, access to an available service, the step of S12 updating, at the service provider device 10a,10b, after access to the available service has been granted, the credit value CV of the offline transaction information data, and the step of S13 sending, from the service provider device 10a,10b to the user device 20a,20b via the local communication network 55, an updated offline transaction information data comprising the updated credit value CV.

An advantage with this second aspect is that the service provider device 10a,10b can enable access to an available service to the user device 20a, 20b without a connection to the Internet 50, based on offline transaction information data and communication via the local communication network 55, and then provide the user device 20a, 20b with an updated offline transaction information data comprising an updated credit value CV for enabling a further offline digital payment based on the updated credit value CV stored at the user device20a, 20b.

According to some embodiments the method further comprises the step of S1 storing, at the service provider device 10a,10b, offline transaction information data comprising a payload of a number of predefined fake transactions PNPfT for identifying participation in the system 100, the step of S2-a receiving, at the service provider device 10a,10b from the user device 20a,20b via the local communication network 55, offline transaction information data comprising a payload of a number of predefined fake transactions PNPfT, the step of S2-b determining, at the service provider device 10a,10b, if the predefined fake transactions PNPfT in the received offline transaction information data corresponds to a predefined fake transactions PNPfT of any previously stored offline transaction information data at the service provider device 10a,10b, and the step of S2-c in determining that the received offline transaction information data corresponds to predefined fake transactions PNPfT of a previously stored offline transaction information data at the service provider device 10a,10b,then granting participation in the system 100 to the user device 20a,20b.

An advantage with this embodiment is that the service provider device does not need to be connected to the Internet 50, to access remote data, but can locally, based on previously stored offline transaction information data at the service provider device, determine if the user device should be granted participation in the system.

According to some embodiments the method further comprises the step of S6 reserving, by the service provider device 10a,10b, a temporary credit value TCV associated with the available service based on the credit value CV, the step of S7 updating, at the service provider device 10a,10b, the credit value CV of the offline transaction information data with the temporary credit value TCV, and the step of S8 sending, from the service provider device 10a,10b to the user device 20a,20b via the local communication network 55, an updated offline transaction information data comprising an updated credit value CV based on the temporarily credit value TCV.

An advantage with this embodiment is that a reservation can be made without connection to the Internet 50, in order to secure that payment of an available service can be made at a later point in time when the available service has been performed or delivered, and at the same tame enable the user device to access a further service provider device with restrictions in the credit value based on the temporarily credit value.

According to some embodiments the method further comprises the step of S10 determining, by the service provider device 10a,10b, that a consumed credit value associated with the available service corresponds to the available credit value CV comprised in the offline transaction information data from the user device 20a,20b, and the step of S11 terminating the service, by the service provider device 10a,10b.

An advantage with this embodiment is that the service provider device can count down the available credit according to the cost of the available service, and terminate the service, even if the user device is no longer in the vicinity of the local communication network and without access to the Internet 50.

According to some embodiments the determination, at the service provider device 10a,10b, if the predefined fake transactions PNPff in the received offline transaction information data corresponds to predefined fake transactions PNPfT of any previously stored offline transaction information data at the service provider device 10a,10b, comprises a determination of a checksum or cryptographic hash based on the predefined fake transactions.

An advantage with this embodiment is that a further check can be performed in order to enhance the access control for granting participation in the system to the user device.

According to some embodiments the offline transaction information comprises a payload of a number of predefined fake transactions PNPfT and an updated credit value CV based on the last digital payment and updated by the service provider device 10a,10b, wherein the predefined fake transactions PNPfT and the updated credit value CV are both associated with a checksum or cryptographic hash and the determination, at the service provider device 10a,10b, if the predefined fake transactions PNPFT in the received offline transaction information data corresponds to predefined fake transactions PNPFT of any previously stored offline transaction information data at the service provider device 10a,10b, comprises a determination of a checksum or cryptographic hash that is based on the predefined fake transactions PNPff and further comprising a determination of a checksum or cryptographic hash that is based on the updated credit value CV previously updated by the service provider device 10a,10b.

An advantage with this embodiment is that a further check can be performed in order to enhance the access control for granting participation in the system to the user device.

The third aspect of this disclosure shows a computer program product comprising a non-transitory computer readable medium, having thereon a computer program comprising program instructions, the computer program being loadable into the processing circuitry 102a,102b,102c and configured to cause execution of the method according to the second aspect when the computer program is run by the processing circuitry 102a,102b,102c.

The person skilled in the art realizes that the present disclosure is not limited to the preferred embodiments described above. The person skilled in the art further realizes that modifications and variations are possible within the scope of the appended claims.

Additionally, variations to the disclosed embodiments can be understood and effected by the skilled person in practicing the claimed disclosure, from a study of the drawings, the disclosure, and the appended claims.

## Claims

1. A system (100) for enabling offline digital payments when the system (100) is not connected to the Internet (50), the system (100) comprises:
• a service provider device (10a,10b) configured to communicate via a local communication network (55); store, transfer and manage offline transaction information, and to manage access to a service;
• a user device (20a,20b) configured to communicate via the local communication network (55); and store, transfer and manage offline transaction information; and
• a processing circuitry (102a,102b,102c) operatively connected to the service provider device (10a,10b) and the user device (20a,20b) configured to:
- determine, by the service provider device (10a,10b) that the user device (20a,20b) is granted participation in the system (100);
- receive, at the service provider device (10a,10b) from the user device (20a,20b) via the local communication network (55), offline transaction information data comprising a credit value (CV);
- read, at the service provider device (10a,10b), the credit value (CV) of the received offline transaction information data;
- determine, at the service provider device (10a,10b), possible available services based on the credit value (CV);
- enable, by the service provider device (10a,10b), access to an available service;
- update, at the service provider device (10a,10b), after access to the available service has been granted, the credit value (CV) of the offline transaction information data; and
- send, from the service provider device (10a,10b) to the user device (20a,20b) via the local communication network (55), an updated offline transaction information data comprising the updated credit value (CV).

2. The system (100) according to claim 1, wherein in order to determine if the user device (20a,20b) is to be granted participation in the system (100) the processing circuitry (102a,102b,102c) is further configured to:
- store, at the service provider device (10a,10b), offline transaction information data comprising a payload of a number of predefined fake transactions (PNPfT) for identifying participation in the system (100);
- receive, at the service provider device (10a,10b) from a user device (20a,20b) via the local communication network (55), offline transaction information data comprising a payload of a number of predefined fake transactions (PNPfT);
- determine, at the service provider device (10a,10b), if the predefined fake transactions (PNPfT) in the received offline transaction information data corresponds to predefined fake transactions (PNPfT) of any previously stored offline transaction information data at the service provider device (10a,10b); and
in a determination that the received offline transaction information data corresponds to predefined fake transactions (PNPfT) of a previously stored offline transaction information data at the service provider device (10a,10b);
- grant participation in the system (100) to the user device (20a,20b).

3. The system (100) according to any of the preceding claims, wherein the processing circuitry (102a,102b,102c) is further configured to:
- reserve, by the service provider device (10a,10b), a temporary credit value (TCV) associated with the available service based on the credit value (CV);
- update, at the service provider device (10a,10b), the credit value (CV) of the offline transaction information data with the temporary credit value (TCV); and
- send, from the service provider device (10a,10b) to the user device (20a,20b) via the local communication network (55), an updated offline transaction information data comprising an updated credit value (CV) based on the temporarily credit value (TCV).

4. The system (100) according to any of the preceding claims, wherein the processing circuitry (102a,102b,102c) is further configured to:
- determine, by the service provider device (10a,10b), that a consumed credit value associated with the available service corresponds to the available credit value (CV) comprised in the offline transaction information data from the user device (20a,20b); and
- terminate the service, by the service provider device (10a,10b).

5. The system (100) according to claim 2, wherein the determination, at the service provider device (10a,10b), if the predefined fake transactions (PNPfT) in the received offline transaction information data corresponds to predefined fake transactions (PNPfT) of any previously stored offline transaction information data at the service provider device (10a,10b), comprising a determination of a checksum or cryptographic hash based on the predefined fake transactions.

6. The system (100) according to any of the preceding claims, wherein the offline transaction information data is configured to be sent from a first user device (20a) to a second user device (20b) via a local communication network (55).

7. The system (100) according to according to any of the preceding claims, wherein the offline transaction information data comprises a payload of a number of predefined fake transactions (PNPfT) and an updated credit value (CV) based on the last digital payment and updated by the service provider device (10a,10b), wherein the predefined fake transactions (PNPfT) and the updated credit value (CV) are both associated with a checksum or cryptographic hash and the determination, at the service provider device (10a,10b), if the predefined fake transactions (PNPfT) in the received offline transaction information data corresponds to predefined fake transactions (PNPFT) of any previously stored offline transaction information data at the service provider device (10a,10b), comprising a determination of a checksum or cryptographic hash that is based on the predefined fake transactions (PNPff) and further comprising a determination of a checksum or cryptographic hash that is based on the updated credit value (CV) previously updated by the service provider device (10a,10b).

8. The system (100) according to any of the preceding claims, wherein the local communication network (55) is any of a wireless local area communication network, a contactless near field communication network, a locally connectable wired communication network, an optical local area communication network.

9. A method for enabling offline digital payments in a system (100) when the system (100) is not connected to the Internet (50), the method comprising:
- (S2) determining, by a service provider device (10a,10b) that a user device (20a,20b) is granted participation in the system (100);
- (S3) receiving, at the service provider device (10a,10b) from the user device (20a,20b) via a local communication network (55), offline transaction information data comprising a credit value (CV);
- (S4) reading, at the service provider device (10a,10b), the credit value (CV) of the received offline transaction information data;
- (S5) determining, at the service provider device (10a,10b), possible available services based on the credit value (CV);
- (S9) enabling, by the service provider device (10a,10b), access to an available service;
- (S12) updating, at the service provider device (10a,10b), after access to the available service has been granted, the credit value (CV) of the offline transaction information data; and
- (S13) sending, from the service provider device (10a,10b) to the user device (20a,20b) via the local communication network (55), an updated offline transaction information data comprising the updated credit value (CV).

10. The method according to claim 9 further comprising:
- (S1) storing, at the service provider device (10a,10b), offline transaction information data comprising a payload of a number of predefined fake transactions (PNPff) for identifying participation in the system (100);
- (S2-a) receiving, at the service provider device (10a,10b) from the user device (20a,20b) via the local communication network (55), offline transaction information data comprising a payload of a number of predefined fake transactions (PNPfT);
- (S2-b) determining, at the service provider device (10a,10b), if the predefined fake transactions (PNPFT) in the received offline transaction information data corresponds to a predefined fake transactions (PNPfT) of any previously stored offline transaction information data at the service provider device (10a,10b); and
- (S2-c) in determining that the received offline transaction information data corresponds to predefined fake transactions (PNPfT) of a previously stored offline transaction information data at the service provider device (10a,10b);
- granting participation in the system (100) to the user device (20a,20b).

11. The method according to any of the claims 9-10 further comprising:
- (S6) reserving, by the service provider device (10a,10b), a temporary credit value (TCV) associated with the available service based on the credit value (CV);
- (S7) updating, at the service provider device (10a,10b), the credit value (CV) of the offline transaction information data with the temporary credit value (TCV); and
- (S8) sending, from the service provider device (10a,10b) to the user device (20a,20b) via the local communication network (55), an updated offline transaction information data comprising an updated credit value (CV) based on the temporarily credit value (TCV).

12. The method according to any of the claims 9-11 further comprising:
- (S10) determining, by the service provider device (10a,10b), that a consumed credit value associated with the available service corresponds to the available credit value (CV) comprised in the offline transaction information data from the user device (20a,20b);and
- (S11) terminating the service, by the service provider device (10a,10b).

13. The method according to claim 10, wherein the determination, at the service provider device (10a,10b), if the predefined fake transactions (PNPfT) in the received offline transaction information data corresponds to predefined fake transactions (PNPfT) of any previously stored offline transaction information data at the service provider device (10a,10b), comprising a determination of a checksum or cryptographic hash based on the predefined fake transactions.

14. The method according to according to any of the claims 9-13, wherein the offline transaction information comprises a payload of a number of predefined fake transactions (PNPFT) and an updated credit value (CV) based on the last digital payment and updated by the service provider device (10a,10b), wherein the predefined fake transactions (PNPfT) and the updated credit value (CV) are both associated with a checksum or cryptographic hash and the determination, at the service provider device (10a,10b), if the predefined fake transactions (PNPfT) in the received offline transaction information data corresponds to predefined fake transactions (PNPfT) of any previously stored offline transaction information data at the service provider device (10a,10b), comprising a determination of a checksum or cryptographic hash that is based on the predefined fake transactions (PNPfT) and further comprising a determination of a checksum or cryptographic hash that is based on the updated credit value (CV) previously updated by the service provider device (10a,10b).

15. A computer program product (500) comprising a non-transitory computer readable medium, having thereon a computer program comprising program instructions, the computer program being loadable into a processing circuitry (102a,102b,102c) and configured to cause execution of the method according to any of claims 9 through 14 when the computer program is run by the processing circuitry (102a,102b,102c).
